# EUROPEAN PATENT SPECIFICATION

(11) **EP 0 677 002 B1**
(45) Date of publication and mention of the grant of the patent: **17.09.1997**
(21) Application number: 92907220.5
(22) Date of filing: 25.03.1992
(51) Int. Cl.: B60N 2/00

(54) **VEHICLE BODY**
FAHRZEUGKARROSSERIE
CARROSSERIE DE VEHICULE

(30) Priority: 09.04.1991 GB 91074351
(43) Date of publication of application: 18.10.1995
(73) Proprietor: McLAREN CARS N.V., Curaçao (AN)
(72) Inventor: MURRAY, Gordon, PuttenhamGGuildford, Surrey GU3 1BG (GB)
(74) Representative: Needle, Jacqueline
(86) International application number: GB9200544
(87) International publication number: WO9218347

(56) References cited:
- EP-A- 0 423 669
- DE-A- 304 677
- FR-A- 1 144 964
- FR-A- 2 094 745
- GB-A- N6 685
- GB-A- 1 126 166

## Description

The present invention relates to a vehicle having a seating arrangement with three seats.

DE-A-304 677 discloses a vehicle incorporating a seating arrangement having three seats, said seating arrangement comprising two rear passenger seats aligned substantially transversely, and a driver's seat arranged substantially centrally and in front of said two rear passenger seats, wherein each of said driver's seat and said two rear passenger seats has a centre line which extends through the centre of the respective seat, the centre lines of all of the seats extending substantially parallel to each other and to the longitudinal extent of said vehicle, wherein said rear passenger seats are on opposite sides of the centre line of said driver's seat, and said front driver's seat extends transversely to overlap part of each said rear passenger seat.

FR-A-2 094 745 also discloses a vehicle incorporating a three-seat arrangement, wherein, however, no transverse overlap is possible, as the rear seats are longitudinally movable to the respective side of the driver's seat.

The present invention seeks to provide a vehicle with three seats in which the passenger cabin is compact and is also comfortable and accessible.

According to the present invention a vehicle as defined above is characterised in that said vehicle has an engine which is disposed substantially in the middle of the length of the vehicle, in that said two rear passenger seats are two separate seats spaced apart and on opposite sides of the centre line of the driver's seat, and in that the front driver's seat extends rearwardly beyond the front of each said rear passenger seat.

A vehicle with its engine, and preferably its transmission, or other weighty parts, arranged substantially intermediate its length is provided thereby with stability. This means that the driver's position is more forwardly than in a front-engined vehicle, for example. The central position of the driver's seat gives enhanced vision and in line controls for the driver.

The two rear passenger seats are spaced such that advantage can be taken of the fact that the human passenger generally has a wider trunk or body than legs, and specifically has shoulders of greater width than the width of the legs. This enables passengers to be comfortably seated on the respective rear seats with which the front driver's seat overlaps. This transverse overlapping arrangement enables the cabin of a vehicle to be kept relatively narrow and yet provide accommodation for the driver and for at least two passengers sat side by side. The arrangement also enables relatively easy access to the passenger seats. Similarly, the rearward overlapping of the driver's seat with the passenger seats also enables a compact, but comfortable and accessible, passenger cabin to be provided.

In an embodiment, the driver's seat extends rearwardly beyond the front of each said rear passenger seat by a distance which is an approximation to the thigh length of an average human. In a preferred embodiment, the driver's seat projects forwardly of the two rear passenger seats by a distance of the order of 320mm. By this means, the trunk of each passenger is kept to the rear of the driver for comfort and to avoid interference by the passengers with the driver's visibility, whilst the passengers can extend their legs to the sides of the driver.

The centrally positioned, front driver's seat extends transversely to overlap part of each said rear passenger seat to keep the overall width of the cabin restricted. The amount of the overlap will depend upon the relative sizes of the seats, their shapes and the like. In a preferred embodiment, the distance, in the transverse direction, between the centre line of the driver's seat and the centre line of each said rear passenger seat is of the order of 410mm.

Preferably, the vehicle has a fuel tank which is disposed substantially intermediately of the length of the vehicle. In a preferred embodiment the fuel tank is located rearwardly of the driver's seat.

In a preferred embodiment, the vehicle is provided with front wheel arches which form foot rests for each of the rear passenger seats.

Embodiments of the present invention will hereinafter be defined, by way of example, with reference to the accompanying drawings, in which:-
Figure 1 shows schematically a plan view from above of an embodiment of a seating arrangement of a vehicle of the present invention,
Figure 2 shows a plan view from above of a sports car incorporating the seating arrangement of Figure 1,
Figure 3 shows a further plan view of the seating arrangement showing dimensions of the arrangement and the provision of a fuel cell or tank, and
Figure 4 shows a perspective view of a cabin structure of a vehicle providing the seating arrangement illustrated.

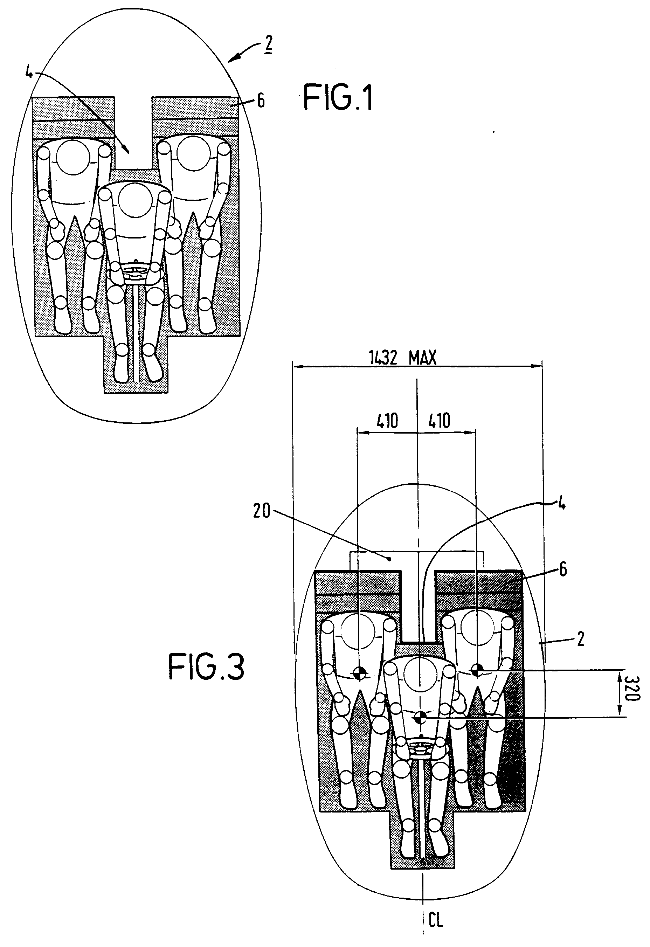

Figure 1 shows schematically a plan view from above of a cabin 2 of a vehicle, such as a sports car, showing the seating arrangement therein. It will be seen, that there is a single, centrally arranged driver's seat 4 and two spaced rear passenger seats 6 which are aligned substantially transversely. Although the driver's seat 4 is arranged generally in front of the two rear passenger seats 6 it does extend rearwardly beyond the front of each said rear passenger seat 6. In addition, the driver's seat 4 extends transversely to overlap part of each said rear passenger seat 6.

The three seat arrangement shown in Figure 1 is comfortable and provides easy access to the seats 4, 6 for all of their occupants. It will be immediately apparent that the seating arrangement is such as to keep the overall width and length taken up by the seats as small as is possible. This compact arrangement is achieved, whilst also providing the necessary space and comfort to the occupants, by utilising the fact that the shoulders and hips of a human, or the trunk generally, is wider than the legs. It is therefore possible to seat a person comfortably behind the driver and provide room for the rear passengers to extend their legs to either side of the driver.

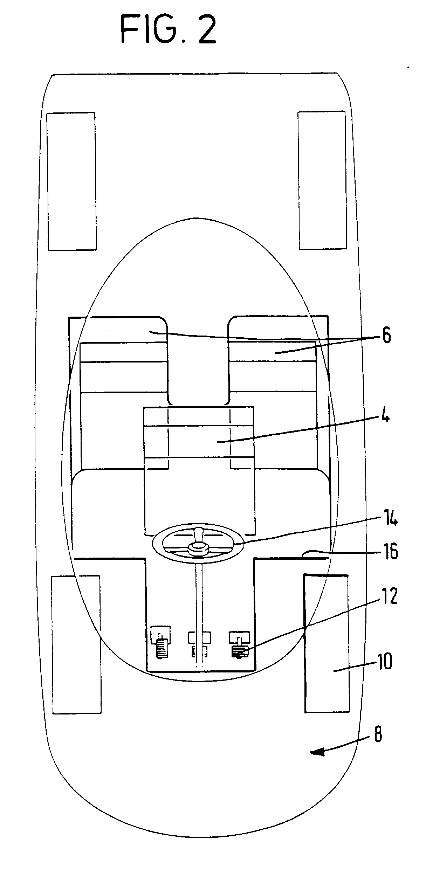

Figure 2 shows a plan view of a three-seat sports car incorporating the seating arrangement of Figure 1. As previously, two spaced rear seats 6 are provided rearwardly with respect to the driver's seat 4. In Figure 2 the body 8 of the car is indicated, together with its wheels 10, and it will be immediately seen that the central position of the driver's seat 4 enables this seat 4 to be aligned with control pedals 12 and a steering wheel 14. Thus, as indicated in Figure 2, even where the car is made to be mid-engined having its engine intermediate the length of the car, and the driver relatively forwardly, the driver's seat is aligned with the controls and is not offset as is conventional. It will also be appreciated that in the forward central position the ergonomics of the seat for the driver are enhanced as compared with known cars, and the vision for the driver is greatly enhanced. In this respect, it is possible to ensure that no forward pillars intrude into the driver's field of vision.

It will be apparent from Figure 2 that the driver is to be seated with his legs extending between the two front wheels 10. As is described with reference to Figure 4, this enables part of the primary structure to be extended on either side of the driver's legs, greatly increasing the crash strength of the vehicle. The central position for the driver means that there is no need to restrict or otherwise compromise on the positioning and size of the front wheel arches, and this means that the wheel lock available and the consequent turning circle can be chosen as required. The two passenger seats 6 are generally each substantially longitudinally aligned with a respective front wheel arch, indicated at 16, and these arches 16 can be formed to provide foot rests for the rear passengers.

Thus, it will be appreciated from a consideration of Figure 2, that the central driver's position obviates problems normally associated with two and four seat mid-engined sports cars, for example, caused by the front wheel arches intruding into the passenger cabin. The central driving position also makes it unnecessary to provide left and right hand drive versions. In addition, the particular seating arrangement as shown in Figure 1 enables these advantages to be gained from a central driving position without having to substantially increase the width of the passenger cabin 2.

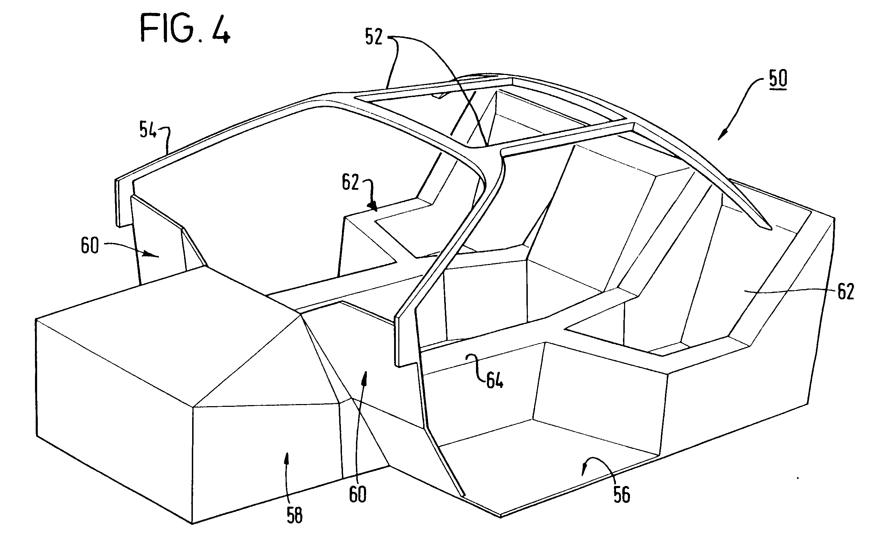

Figure 3 shows a further plan view of an embodiment of a seating arrangement of the invention shown within a passenger cabin 2 having a maximum width of 1,432mm. This compares favourably with the width of currently available two-seat sports cars. For example, a Ferrari Testarossa is 1,494mm wide, whilst the Lamborgini Countach is 1,710mm. In this respect, in the arrangement of Figure 3, the central driver's seat 4 is offset forwardly of substantial transverse alignment with the two rear passenger seats 6 by a distance of 320mm. The distance between the centre of the central driver's seat 4 and the centre of each rear passenger seat 6 is 410mm.

The positioning of the driver's seat forwardly of the two rear passenger seats 6 enables a safety fuel tank 20 to be located in the vehicle behind the driver's seat 4. This is in the safest possible position for a fuel tank in the event of a crash. Also, for a mid-engined vehicle this central position of the fuel tank coincides with the centre of gravity of the vehicle. The vehicle will therefore have no change in its centre of gravity no matter how full or empty the tank. This gives the car extremely safe dynamic balance characteristics.

Figure 4 shows schematically a perspective view of a cabin structure for a mid-engined sports car embodying the present invention. This cabin structure 50 is of a monocoque construction of any suitable material, for example, of steel. It will be seen that the cabin structure 50 defines roof supports 52 and a front window frame 54. The cabin structure 50 also defines a floor 56 and a front boot space 58. Front wheel arches 60 are defined on either side of the boot space 58. The cabin structure 50 is fabricated as one piece to include two spaced rear passenger seat supports 62. It will be appreciated that it is only necessary to support appropriate upholstery on the two supports 62 to form the two rear seats 6. Thus, the seat supports 62 are formed as an integral part of the cabin structure 50 and no mounting points therefor are required. Because the passenger seat supports 62 are an integral part of the monocoque structure it will be appreciated that far more of the cross-section of the passenger cabin 2 is part of the primary structure which greatly improves the stiffness of the vehicle chassis and occupant safety.

Having the passenger seat supports 62 moulded into the primary cabin structure 50 enables parts 64 of that structure to be provided to extend on each side of the driver's legs as noted above. The two parts 64 extend from the seat supports 62 and define a well in the cabin structure 50 in which the driver's seat 4 is mounted. Of course, it is generally preferred to mount the driver's seat 4 on the cabin structure 50 for movement with respect thereto so that an appropriate driving position can be chosen.

In a preferred embodiment, one of the parts 64 and an adjacent part of the floor 56 is mounted to be removable when a door (not shown) mounted on the cabin structure is opened. This enables the driver in the central sitting position to swing his feet to the ground as the door opens. This may be achieved by forming the part 64 and part of the floor 56 integral with the door.

It will be appreciated that although the driver's seat is forwardly of the two passenger seats, the tops of the three seats, supporting the heads of the occupants, are in a similar part of the passenger cabin 2 so that it is a simple matter to provide sufficient headroom at that position.

It will be appreciated that modifications in and variations to the invention as described above may be made if within the scope of the present invention as defined in the appended claims.

## Claims

1. A vehicle incorporating a seating arrangement having three seats, said seating arrangement comprising two rear passenger seats (6) aligned substantially transversely, and a driver's seat (4) arranged substantially centrally and in front of said two rear passenger seats, wherein each of said driver's seat (4) and said two rear passenger seats has a centre line which extends through the centre of the respective seat, the centre lines of all of the seats extending substantially parallel to each other and to the longitudinal extent of said vehicle, wherein said rear passenger seats are on opposite sides of the centre line of said driver's seat, and said front driver's seat extends transversely to overlap part of each said rear passenger seat, characterised in that said vehicle has an engine which is disposed substantially in the middle of the length of the vehicle, in that said two rear passenger seats are two separate seats (6) spaced apart and on opposite sides of the centre line of the driver's seat, and in that the front driver's seat (4) extends rearwardly beyond the front of each said rear passenger seat (6).

2. A vehicle as claimed in Claim 1, wherein the distance, in the transverse direction, between the centre line of the driver's seat (4) and the centre line of each said rear passenger seat (6) is of the order of 410mm.

3. A vehicle as claimed in Claim 1 or Claim 2, wherein said driver's seat (4) extends rearwardly beyond the front of each said rear passenger seat (6) by a distance which is an approximation to the thigh length of an average human.

4. A vehicle as claimed in Claim 3, wherein the driver's seat (4) projects forwardly of the two rear passenger seats by a distance of the order of 320mm.

5. A vehicle as claimed in any preceding claim, wherein said vehicle is provided with front wheel arches (16) which form foot rests for each of the rear passenger seats (6).

6. A vehicle as claimed in any preceding claim, wherein said vehicle has a fuel tank (20) which is disposed substantially intermediately of the length of the vehicle.

7. A vehicle as claimed in Claim 6, wherein the fuel tank is located rearwardly of the driver's seat (4).

## Patentansprüche

1. Fahrzeug mit einer drei Sitze umfassenden Sitzanordnung, wobei die Sitzanordnung zwei hintere Beifahrersitze (6), die in Querrichtung im wesentlichen miteinander ausgerichtet sind, und einen Fahrersitz (4) enthält, der im wesentlichen mittig zwischen und vor den beiden hinteren Beifahrersitzen angeordnet ist, wobei der Fahrersitz (4) und jeder der beiden hinteren Beifahrersitze eine Mittellinie hat, die durch die Mitte des jeweiligen Sitzes verläuft, wobei die Mittellinien von allen diesen Sitzen im wesentlichen parallel zueinander und zur Längserstreckung des Fahrzeugs verlaufen, wobei die hinteren Beifahrersitze an gegenüberliegenden Seiten der Mittellinie des Fahrersitzes gelegen sind und wobei sich der vordere Fahrersitz sich in Querrichtung erstreckt, um einen Teil von jedem hinteren Beifahrersitz zu überdecken, dadurch gekennzeichnet, daß das Fahrzeug einen Motor hat, der im wesentlichen in der Mitte der Länge des Fahrzeugs angeordnet ist, daß die beiden hinteren Beifahrersitze zwei getrennte Sitze (6) sind, die voneinander beabstandet und an gegenüberliegenden Seiten der Mittellinie des Fahrersitzes gelegen sind, und daß sich der vordere Fahrersitz (4) nach hinten bis hinter den vorderen Bereich von jedem hinteren Beifahrersitz (6) erstreckt.

2. Fahrzeug nach Anspruch 1, bei dem der Abstand in Querrichtung zwischen der Mittellinie des Fahrersitzes (4) und der Mittellinie von jedem Beifahrersitz (6) etwa 410 mm beträgt.

3. Fahrzeug nach Anspruch 1 oder Anspruch 2, bei dem sich der Fahrersitz (4) nach hinten bis hinter den vorderen Bereich von jedem hinteren Beifahrersitz (6) über eine Entfernung erstreckt, die ungefähr der Länge des Oberschenkels eines Durchschnittsmenschen entspricht.

4. Fahrzeug nach Anspruch 3, bei dem der Fahrersitz (4) bezüglich der beiden hinteren Beifahrersitze über eine Entfernung von etwa 320 mm nach vorne vorsteht.

5. Fahrzeug nach einem der vorhergehenden Ansprüche, bei dem das Fahrzeug mit Vorderradkästen (16) versehen ist, die für jeden der hinteren Beifahrersitze (6) Fußauflagen bilden.

6. Fahrzeug nach einem der vorhergehenden Ansprüche, bei dem das Fahrzeug einen Treibstofftank (20) hat, der im wesentlichen in der Mitte der Länge des Fahrzeugs angeordnet ist.

7. Fahrzeug nach Anspruch 6, bei dem der Treibstofftank hinter dem Fahrersitz (4) angeordnet ist.

## Revendications

1. Véhicule qui comprend une disposition des places assises comportant trois sièges, ladite disposition des places assises comprenant deux sièges arrière (6) pour passagers, alignés dans une direction essentiellement transversale, et un siège conducteur (4), disposé essentiellement au centre et à l'avant desdits deux sièges arrière pour passagers, dans lequel chacun desdits sièges que sont le siège conducteur (4) et les deux sièges arrière pour passagers possède un axe d'assise qui passe par le centre de chaque siège, les axes d'assise de tous les sièges étant essentiellement parallèles les uns aux autres et à la direction longitudinale dudit véhicule, dans lequel lesdits sièges arrière pour passagers sont disposés de chaque côté de l'axe d'assise dudit siège conducteur, et ledit siège avant pour le conducteur s'étend dans la direction transversale et recouvre partiellement chacun desdits sièges arrière pour passagers, caractérisé en ce que le moteur dudit véhicule est disposé essentiellement à milongueur du véhicule, en ce que lesdits deux sièges arrière pour passagers sont deux sièges distincts (6), écartés l'un de l'autre et disposés de chaque côté de l'axe d'assise du siège conducteur, et en ce que le siège avant (4) pour le conducteur s'étend vers l'arrière, au-delà du bord avant de chacun desdits sièges arrière (6) pour passagers.

2. Véhicule selon la revendication 1, dans lequel la distance, dans la direction transversale, entre l'axe d'assise du siège conducteur (4) et l'axe d'assise de chacun desdits sièges arrière (6) pour passagers, est de l'ordre de 410 mm.

3. Véhicule selon la revendication 1 ou la revendication 2, dans lequel ledit siège conducteur (4) s'étend vers l'arrière, au-delà du bord avant de chacun desdits sièges arrière (6) pour passagers, sur une distance qui est approximativement égale à la longueur des cuisses d'un être humain moyen.

4. Véhicule selon la revendication 3, dans lequel le siège conducteur (4) dépasse vers l'avant des deux sièges arrière pour passagers sur approximativement 320 mm.

5. Véhicule selon l'une quelconque des revendications précédentes, dans lequel ledit véhicule est muni de passages de roues avant (16) qui forment un repose-pieds pour chacun des sièges arrière (6) pour passagers.

6. Véhicule selon l'une quelconque des revendications précédentes, dans lequel ledit véhicule possède un réservoir d'essence (20) qui est disposé essentiellement en un point intermédiaire de la longueur du véhicule.

7. Véhicule selon la revendication 6, dans lequel le réservoir d'essence est situé à l'arrière du siège conducteur (4).
